(19) **Europäisches Patentamt / European Patent Office / Office européen des brevets**

(11) **EP 2 043 305 B1**

(12) **EUROPEAN PATENT SPECIFICATION**

(45) Date of publication and mention
of the grant of the patent:
**21.01.2015 Bulletin 2015/04**

(51) Int Cl.:
*H04L 12/28* (2006.01)  *H04L 12/801* (2013.01)
*H04L 12/803* (2013.01)  *H04W 28/08* (2009.01)
*H04W 40/12* (2009.01)

(21) Application number: **07019136.6**

(22) Date of filing: **28.09.2007**

(54) **Method and system for load balancing and QoS provisioning in a controlled broadband access sharing system**

Verfahren und System zum Lastausgleich und zur QoS-Bereitstellung in einem System mit kontrolliertem Breitbandzugang zur gemeinsamen Nutzung

Procédé et système pour l'équilibrage de charge et la fourniture de QoS dans un système à partage contrôlé d'accès de bande passante

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**01.04.2009 Bulletin 2009/14**

(73) Proprietor: **Deutsche Telekom AG**
**53113 Bonn (DE)**

(72) Inventors:
- **Pal Singh, Jatinder, Dr.**
**10719 Berlin (DE)**
- **Zerfos, Petros, Dr.**
**10709 Berlin (DE)**
- **Vidales, Pablo, Dr.**
**10437 Berlin (DE)**
- **Solarski, Marcin, Dr.**
**10623 Berlin (DE)**

(74) Representative: **Kampfenkel, Klaus**
**Blumbach - Zinngrebe**
**Patentanwälte**
**Alexandrastrasse 5**
**65187 Wiesbaden (DE)**

(56) References cited:
**EP-A- 1 587 262**        **WO-A-2004/028175**
**US-A1- 2003 134 644**

- **BERG M ET AL: "A Concept for Public Access to Privately Operated Cooperating Local Access Points" VEHICULAR TECHNOLOGY CONFERENCE, 2005. VTC 2005-SPRING. 2005 IEEE 61ST STOCKHOLM, SWEDEN 30 APRIL - 01 MAY 2005, PISCATAWAY, NJ, USA,IEEE, 30 May 2005 (2005-05-30), pages 2959-2963, XP010855992 ISBN: 0-7803-8887-9**

## Description

### Field of the invention

The invention relates to communication networks in general, and especially to a method and a system for balancing data loads between several network access devices, in particular between wireless network access devices adapted to provide broadband Internet access.

### Background of the invention

The availability of broadband Internet access steadily increases with a great variety of different technologies being utilized for providing broadband Internet connectivity. Exemplary technologies comprise xDSL, WiMAX and satellite, cable, power-line or optical fiber connections. By means of these technologies the broadband access connections can be provisioned by an Internet service Provider (ISP).

Typically an ISP provides an access device to its customers to enable broadband Internet access. In the following such access device is also referred to as customer premises equipment (CPE). Since the use of wireless communication devices such as notebooks, PDAs, MDAs, smartphones, which are adapted for Internet usage are increasingly common, the CPE typically incorporates a wireless router. Hence, in the following the term CPE typically shall describe a combination of a wireless router and an Internet connectivity apparatus like for instance a DSL or cable modem, wherein the CPE can be provided as a single device or as an arrangement of interconnected devices.

The common usage of wireless communication devices has lead to application scenarios in which broadband Internet access connections owners, in the following also referred to as private users, share their Internet connection with other users, in the following also referred to a public users, utilizing the wireless router capability of the CPE hosted by the private users.

As an Internet connection is shared by a multitude of users, however, the bandwidth may be insufficient to meet the requirements of applications running on user devices. However, while one private user's Internet connection may be heavily under use, another private user's connection might be idle.

In "A Concept for Public Access to Privately Operated Cooperating Local Access Points" by M. Berg et al., Vehicular Technology Conference 2005 IEEE 61st Stockholm, 30 April - 01 May 2005, Piscataway, NJ, USA, pages 2959-2963, a concept of cooperating Local Access points (LAP) is described, wherein a LAP which lacks its own fixed access relays traffic via other LAPs which is made possible, since the LAPS are able to cooperate over wireless links. Thereby a possibility is offered to do load balancing in case of congestion on the backbone. Preferably each LAP contains two independent radios that can be used simultaneously, one for communicating with the users and one for communicating between LAPs.

In the context of a WLAN (Wireless local area network) methods for load balancing are known. For instance in US 2005/0053046 A1 a load balancing method for a wireless local area network (WLAN) having a plurality of access points is described, wherein the load balancing decisions are performed by a load balancing module depending on the traffic conditions and bandwidth availability of each of a number of traffic priority classes.

In US 2004/095942 A1 a system and method for load balancing among access points in a LAN is described, wherein load balancing is achieved by having the access points enter and exit an SSID hidden state that prohibits mobile stations from associating with the respective access point.

However, the described load balancing methods do not relate to the above scenario of CPEs with, for example, DSL or cable modem capabilities, which are provisioned by Internet Service Providers at the subscriber's premises, wherein a CPE acts as a router and offers wireless connectivity to the Internet, wherein the CPE can also be accessed by public users via wireless devices.

Furthermore, the load balancing methods described in US 2005/0053046 A1 and US 2004/095942 A1 can only be utilized, if the wireless communication device requesting access is located within transmission reach of at least two access points.

Therefore it is an object of the present invention to show a new and improved approach to load balancing in a network access system, in particular in a wireless broadband Internet access system shared by private and public users.

### Summary of the Invention

The inventive solution of the object is achieved by each of the subject matter of the respective attached independent claims. Advantageous and/or preferred embodiments or refinements are the subject matter of the respective attached dependent claims.

Accordingly, an inventive method for load balancing is adapted for use in a network access system with a number of access devices each of which being connected to a network and providing network access to communication devices of public or private users, wherein at least a subset of said number of access devices are wirelessly interconnected and comprises the steps of sending a request from a communication device to a first access device of said number of access devices for initiating a data flow between said communication device and a destination node connected to said network, and determining a congestion state of the connection between the first access device and the network. If congestion of the connection between the first access device and the network is detected, the steps of selecting a second access device from said number of access devices depending on the quality of the respective wireless connection with the first access device, and establishing a redirected data flow between the communication device and the destination node, wherein said data flow is established such that data originating from the communication device is transmitted from the first access device via the second access device to the network and data received from the network is transmitted from the second access device via the first access device to the communication device.

If no congestion of the connection between the first access device and the network is detected or at least no congestion with respect to the class of traffic of the requested data flow, as described below, the data flow is established in the known way, such that data originating from the communication device is transmitted directly from the first access device to the network and data received from the network is transmitted directly from the first access device to the communication device.

The access devices are capable of communication with each other over a wireless medium, for instance utilizing a wireless connection based on the wireless distribution system according to the IEEE 802.11 standard. Since this wireless connection between a first and a second access device is utilized for redirecting the data flow, the requesting communication device is not required to be directly connectable to the second access device.

Preferably the communication device is provided as a wireless communication device, with which the first access device is adapted to communicate wirelessly. In this embodiment it is accordingly not necessary that the wireless communication device is within transmission reach of the second access device.

In a preferred embodiment of the inventive method the network is the Internet, the network access system is a broadband Internet access system and the access devices are residential gateways comprising a wireless router and means for broadband connection to the Internet, wherein said means for broadband connection for instance comprises a DSL modem or a cable modem. However, also any other suitable means can be utilized, for instance means adapted for use with WiMAX technology, or with power-line or optical fiber connections.

For any of the access technologies mentioned above the available bandwidth for Internet connections typically is lower than the bandwidth of the wireless connection between the access devices. Therefore, the inventive method achieves the load balancing effect by redirecting data flows from a first access device, the Internet connection of which is congested, to a second access device, the Internet connection of which is not congested, via a wireless connection which has a higher bandwidth.

Based on the fact that the access devices are wirelessly interconnected, it has been found by the inventors to be advantageous to organize the access devices into groups. Accordingly, the inventive method preferably comprises the step of organizing the number of access devices into at least one group of access devices, wherein said organizing is controlled by a centralized server of the network and wherein the first and second access devices belong to the same group of access devices.

In a preferred embodiment of the inventive method for organizing the number of access devices into groups each access device detects neighboring access devices, to which a wireless connection can be established, and determines for each neighboring access device an address and a quality measure of the respective wireless connection. A list of neighboring access devices, comprising the respective addresses and quality measures, is then transmitted from each access device to the centralized server. The centralized server then organizes the number of access devices into at least one group based on the received lists and a pre-defined clustering algorithm and transmits to each access device of said number of access devices respective group information.

The use of an exclusive clustering algorithm, resulting in each of said number of access devices belonging to only one group, has been found to be most advantageous.

Particularly for the case that the wireless connection between the access devices is based on the wireless distribution system according to the IEEE 802.11 standard, the centralized server preferably associates each of said groups with a selected transmission channel, so that access devices of different groups do not interfere with each other. In this embodiment the group information transmitted to the access devices comprises information on the transmission channel associated with the respective group.

Since over time the reachability between access devices may change and some access devices may be switched on or off, the step of organizing the access devices into groups preferably is repeated at pre-defined times.

For practical reasons the groups are defined by the centralized server in such a way that each access device belonging to a group has one-hop connectivity to at least one other member of the same group. For certain purposes, in particular for forming small groups, it can be advantageous to select a clustering algorithm which is adapted to form groups in such a way that each access device belonging to a group has one-hop connectivity to all other members of the same group.

For redirecting a data flow the first access device preferably selects the second access device from members of the same group depending on the quality of the respective wireless connection with the first access device. For this purpose advantageously each access device repeatedly determines a quality measure for the respective wireless connection to each of its neighboring access devices belonging to the same group.

In a most preferred embodiment of the method status information is transmitted from each access device of a group to each of its neighboring access devices of the same group, wherein said status information comprises a time stamp, the sender address and the congestion state of the connection between the sending access device and the network. In addition to the received status information in each of said neighboring access devices a quality measure of the wireless connection with the transmitting access device is determined by evaluating pre-defined transmission parameters. Based on this information, in each access device of a group a neighbor table is generated and stored, wherein each table entry of said neighbor table is associated with a neighboring access device and comprises the address of the neighboring device, a quality measure of the wireless connection to the neighboring device and the congestion state of the connection between the neighboring device and the network.

In order to keep the neighbor tables up-to-date the status information is repeatedly transmitted in pre-defined time intervals. The status information with advantage can also comprise the neighbor table stored in the sending device. That way the receiving access device may already retrieve new status information from the received neighbor list relating to access devices neighboring the sending access device, before receiving these directly from the respective access device itself. This is especially useful with respect to the congestion state as this parameter may change rapidly.

The pre-defined transmission parameters for evaluating the equality of the wireless connection between access devices preferably comprises a signal-to-noise ratio and/or a packet error rate. However, any other suitable parameters may also be used.

Most preferably, the selection of the access device for flow redirection is based not only on the quality of the respective wireless connection, but also on the respective congestion states of the connections between the access devices and the network. Accordingly the method preferably comprises that the first access device selects the second access device from all of its neighboring access devices belonging to the same group as the first access device depending on the congestion state of the connection between each neighboring access device and the network and the quality of the wireless connection to each neighboring access device.

Congestion is especially critical for certain applications, like for instance voice and video applications, which require a certain constant minimum bandwidth. To assure quality of service (QoS) for such applications, data flows preferably are categorized in a number of classes of traffic (COT), wherein each COT is associated with a different priority. Therefore, the access devices preferably are adapted for handling data flows of such different classes of traffic with each of said classes of traffic being associated with a different priority for the respective data flow, wherein the congestion state of the connection between an access device and the network of an access device comprises congestion information for each of said different classes of traffic, and wherein congestion of the connection between the first access device and said network is detected depending on the class of traffic of the requested data flow. For handling said data flows of different classes of traffic the access devices preferably are provided with a corresponding number of data buffers and the step of determining a congestion state of a connection between an access device and the network preferably comprises determining the state of said data buffers.

The congestion state accordingly can be represented by a tuple with a number of values, wherein each value comprises information on the congestion state with respect to a corresponding COT. Instead of tuple, in the following also the term vector is used.

For practical purposes for maintaining the redirected data flows, in the first and second access devices a respective list of redirected data flows is maintained. Since each access device may itself redirect data flows and may also forward data flows redirected by other access devices, each access device preferably maintains two respective lists of redirected data flows.

By the inventive method it is advantageously achieved to organize CPEs, which have connectivity with each other, into clusters and balance the traffic amongst them. The cluster formation preferably is mediated and controlled by ISPs by means of a centralized backend server, thereby achieving a controlled broadband access sharing.

Further, in a preferred embodiment a fraction of the available bandwidth of an access device for accessing the network, in particular the Internet, is reserved for a pre-defined group of communication devices or users, i.e. private users, in the case of access devices provided as CPEs typically the owner of the CPE. The remaining bandwidth preferably is allowed for usage by any public user or any one of a pre-defined group of public users. When the publicly available network bandwidth is not used by the public users, it preferably can be used by the private users.

For this purpose, preferably respective COTs are defined taking into account the different user types, i.e. private or public, and the different types of data flows, for instance voice or video data flows. That way it can be distinguished between different classes of traffic (COT) being generated by private and public users.

Furthermore, also for certain types of data flows a pre-defined bandwidth can be reserved in order to meet respective QoS criteria. So for instance the voice and video traffic generated by public and/or private users have a reserved fraction of bandwidth over the remainder of best effort traffic. Bandwidth partitioning as described above can for instance be achieved by setting the rate shape parameters of a HTB (Hierachical Token Bucket) scheduling for each COT accordingly. Whenever the bandwidth of a connection becomes insufficient, the inventive load balancing preferably accounts for the COT of the data flows while redirecting them to other access devices.

An inventive network access device, connectable to a network, for providing network access for communication devices, in particular for wireless communication devices, connectable to the network access device, comprises means for determining a congestion state of a connection between the network access device and a network, connecting means for wirelessly connecting to neighboring network access devices, and flow redirection means for redirecting selected data flows via selected ones of said neighboring network access devices. An inventive network access device preferably is adapted for performing a method as described above.

The connecting means preferably is adapted for establishing a wireless connection based on the wireless distribution system according to the IEEE 802.11 standard. As already described above, the access device preferably is provided as a residential gateway for providing broadband access to the Internet, comprising a wireless router and means for broadband connection to the Internet, wherein said means for broadband connection for instance comprises a DSL modem or a cable modem.

The access device with advantage is adapted to detect neighboring access devices and to generate a neighbor list comprising for each detected neighboring access device an address and a quality measure of the respective wireless connection. It is further preferably adapted to automatically generate such neighbor list and transmit the list to a centralized network server, wherein for receiving group information, which associates the device with a group of access devices, from said centralized network server the access device preferably comprises respective reception means. Most preferably the access device is adapted to communicate with the centralized server by means of a remote management connection according to the DSL Forum Technical Report TR-069.

The flow redirection means preferably is adapted to select an access device for flow redirection from detected neighboring access devices belonging to the same group depending on information on congestion states received from the neighboring access devices of the same group, and on the connection quality to the neighboring access devices of the same group.

For handling data flows of a pre-defined number of different classes of traffic (COT), the access device with advantage is provided with a corresponding number of data buffers, wherein each of said classes of traffic is associated with a different priority for the respective data flow, and wherein the means for determining a congestion state is adapted to determine a congestion state comprising congestion information for each of said different classes of traffic by determining the state of said data buffers. The buffers are used for queuing data packets of data flows of the respective COT, wherein congestion preferably is defined to occur, if the respective buffer is filled up to or above a pre-defined limit. In a preferred embodiment, said congestion information related to a COT simply comprises the information whether the respective buffer is congested or not, resulting in a congestion state comprising a tuple of values of either 1 or 0, wherein 1 means the buffer is congested and 0 means it is not.

In a preferred embodiment the access device is adapted for reserving a fraction of the available bandwidth of its connection to the network for a pre-defined group of communication devices and/or users.

The access device further preferably comprises storage means for storing redirection tables with parameters of redirected data flows, comprising separate tables for data flows redirected by the device itself and data flows redirected by neighboring devices.

An inventive network server for organizing a number of network access devices into groups of devices comprises reception means for receiving from each of said number of network access devices a neighbor list, said neighbor list comprising addresses and wireless connectivity information of each access device neighboring the respective sending access device, group determining means for organizing said number of access devices into groups of access devices based on a pre-defined clustering algorithm and on received neighbor lists, and transmitting means for transmitting group information to each of said number of access devices.

The pre-defined clustering algorithm preferably is an exclusive clustering algorithm, resulting in each of said number of access devices belonging to only one group. An example of such exclusive clustering algorithm is the K-means algorithm for clustering objects into k partitions. The clustering algorithm further preferably is adjusted in such a way as to form groups of access devices, so that each access device belonging to a group has one-hop connectivity to at least one other member of the same group. In an alternative embodiment the clustering algorithm is adjusted in such a way as to form groups of access devices, so that each access device belonging to a group has one-hop connectivity to all other members of the same group.

For communicating with the access devices the server preferably is adapted for providing remote management connections according to the DSL Forum Technical Report TR-069.

For repeatedly initiating the group forming process the server with advantage is adapted to transmit a trigger signal to an access device for initiating the generation and transmission of a neighbor list.

A network access system, which comprises at least one network server as described above and at least two network access devices as described above, which is adapted to perform a method as described, also lies within the scope of the invention.

Brief Description of the Figures

It is shown in

Fig. 1    a schematic view of a prior art broadband access sharing system,

Fig. 2    a schematic view of a preferred embodiment of an inventive network access system,

Fig. 3    the system of Fig. 2 depicting a redirected data flow,

Fig. 4    schematically client-side functional components of a preferred embodiment of an inventive access device, adapted for flow redirection, and

Fig. 5    schematically server-side functional components of a preferred embodiment of an inventive access device, adapted for flow redirection.

Detailed Description of the Invention

Subsequently, preferred but exemplar embodiments of the invention are described in more detail with regard to the figures.

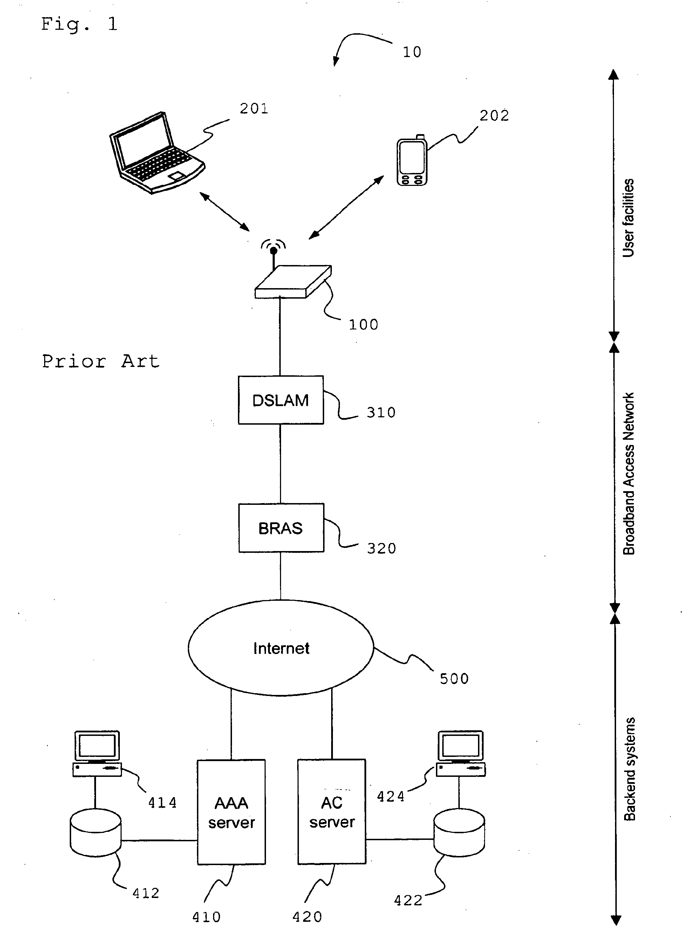

Fig. 1 shows components of a broadband access sharing system 10 according to the prior art. A private user hosts a CPE 100 which broadcasts two different wireless networks-public and private. The term "network" in this respect refers to an access path provided with certain parameters for the purpose of limiting the use to specific user groups, i.e. private or public users, when the wireless technology employed by a router of the CPE 100 is WiFi (IEEE 802.11), the two different networks can have two distinct BSSIDs. The private user can connect with notebook 201 to the Internet 500 via the private network. The private user's traffic to and from the Internet 500 traverses the ISP infrastructure including DSLAM (Digital subscriber line access multiplexer) 310 and BRATS (Broadband remote access server) 320.

When a public user via his wireless device 202, which in the shown example is a PDA, connects to the public network, a captive login portal redirects the connection request to backend AAA server 410 which presents a login page to the public user. Upon successful authentication via a user name and password, the public user is allowed access to the Internet 500. The system 10 also comprises a remote management functionality utilizing an AC server (Auto configuration server) 420 which allows remote configuration of the CPE 100 via Wide Area Network (WAN) Management systems based on for example DSL forum's TR-069 standards.

In the shown system 10, the AC server 420 is connected to an EHS (Extended HotSpots) database 422, into which configuration parameters of different types of devices are entered by means of an administrator interface 424.

The AAA server 410, for instance provided as a RADIUS server, is utilized for user authentication, authorization and accounting. For this purpose it is connected to a respective AAA database 412, which is provided with an administrator interface 414.

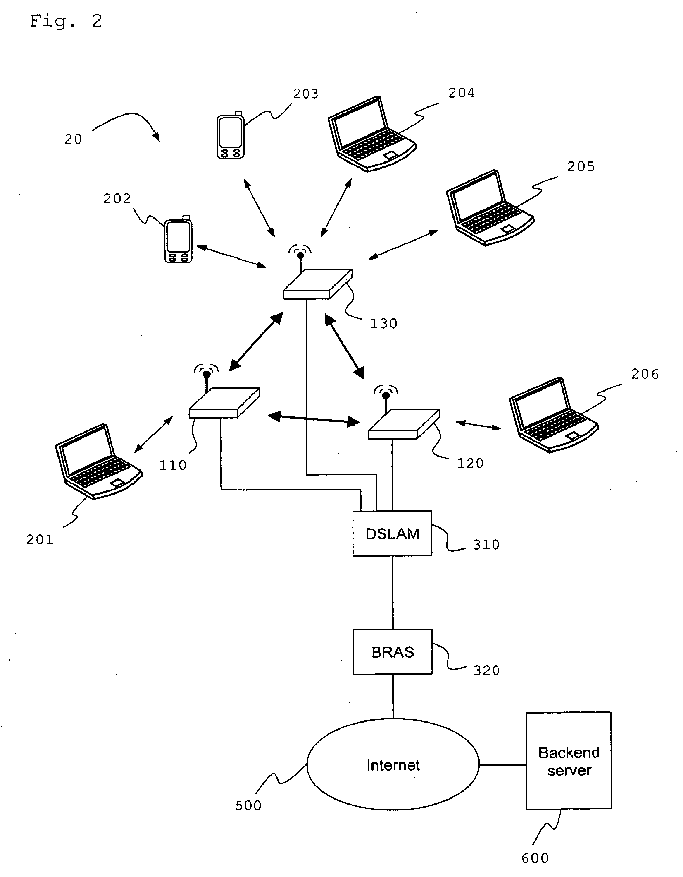

Fig. 2 shows a schematic view of a preferred embodiment of an inventive network access system 20. Therein, a group of access devices provided as CPEs 110, 120 and 130 form a group or cluster of devices, wherein load balancing operations are performed within said group of devices. A backend server 600 assists the operation and allows for a controlled sharing of load between the CPEs 110, 120 and 130. The CPEs 110, 120 and 130 comprise wireless routers which exemplary are based on the standard IEEE 802.11, the CPEs 110, 120 and 130 communicating with each other over the wireless distribution system (WDS) defined in that standard. Similar to the system shown in Fig. 1, the ISP infrastructure comprises DSLAM 310 and BRAS 320, extended however by the inventive backend server 600, which is centrally localized and adapted to communicate with each of CPEs 110, 120 and 130 by means of a remote management connection according to the DSL Forum Technical Report TR-069.

Wireless communication devices 201-206 can access those of the CPEs 110, 120 and 130 which are within transmission reach. In the shown example for instance notebooks 201, 205 and 206 are used by private users, who respectively own CPEs 110, 130 and 120. The remaining wireless communication devices 202-204 are used by public users.

Each CPE 110, 120 and 130 is provided with several buffers for handling different classes of traffic belonging to private and public networks. The packets in these buffers are scheduled for instance by utilizing known scheduling policies like Hierarchical Token Bucket (HTB) and/or Weighted Round Robin (WRR).

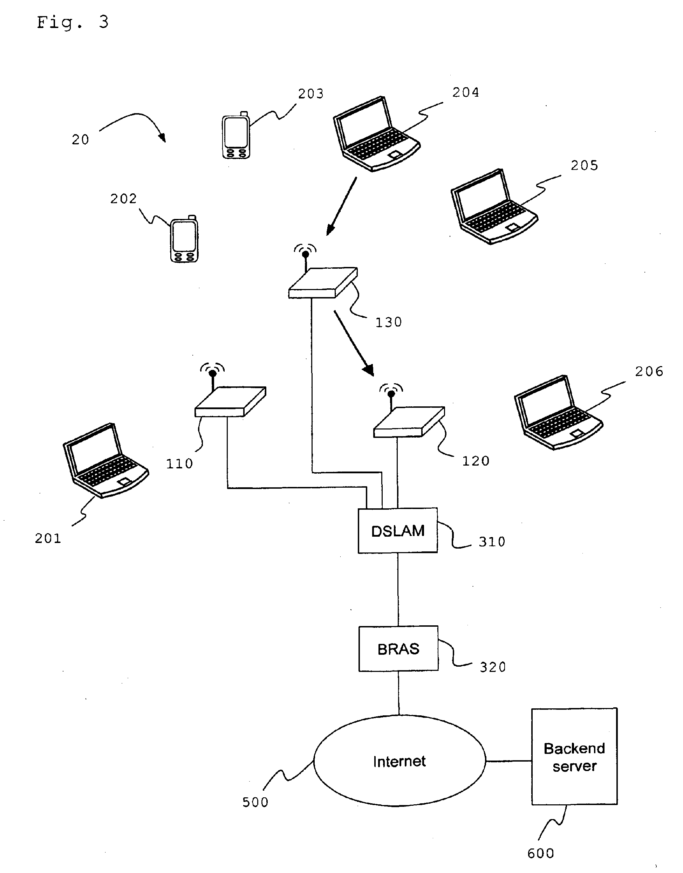

A key aspect of the invention lies in the redirection of data flows via neighboring access devices. This is exemplary depicted in Fig. 3. Therein, the connection between CPE 130 and the Internet 500 is congested at least with respect to one class of traffic (COT) due to several wireless communication devices 202-204 accessing this CPE 130. A request transmitted from wireless communication device 204 to CPE 130 for establishing a data session with the same or a lower priority of the congested COT results in a redirected data flow, wherein the data flow is redirected via the wireless connection to CPE 120 which in turn forwards the data flow to the requested destination node.

In the following the inventive load balancing and QoS functionality is described in more detail.

In Figs. 2 and 3 only three exemplary CPEs 110, 120 and 130 are depicted which belong to the same group. However, the invention is not limited to such a scenario. Typically a plurality of access devices are provided, for instance all CPEs provided by the same ISP (Internet Service Provider), which are then organized into separate groups of devices.

For the purpose of forming such groups, in the following also referred to as clustering, a scan process is performed for detecting neighboring devices which can communicate with each other via a wireless connection based on IEEE 802.11. Each CPE scans for the neighbouring CPEs present in each of the channels and retrieves the MAC addresses and link connectivity to them.

This information is maintained and stored as a suitable data structure, for instance a hash table with the MAC address hashed to an index.

The scanning functionality for example can be implemented by means of the following steps to be followed for each channel:

a) disabling of the radio transceiver,
b) performing a channel configuration to operate on the respective channel,
c) enabling of the radio transceiver,
d) performing an SNR (Signal-to-noise) evaluation to neighboring devices on the presently configured channel, for example by listening to beacons emitted periodically by the neighboring access devices, and
e) storing for the current channel the list of neighboring access devices with MAC address and link connectivity values in said data structure.

The scan function may be automatically executed by a CPE 110, 120 or 130 at a pre-defined time, for instance every day at around 4 a.m., when it is unlikely that any of the wireless devices 201-206 are associated with the CPE. However, with advantage the time of this operation is randomized to ensure that there is a sufficiently low chance that two neighboring CPEs perform the operation at the same time. For example, an access device may perform the scan at the time 4:00 a.m. + x minutes, wherein x is a random number between -120 and 120. Alternatively the scan operation can be triggered by the backend server 600 on the CPEs 110, 120 and 130.

In the backend server 600 a clustering algorithm is run to form a cluster of CPEs based on the information provided to the backend by the CPEs. A cluster preferably is defined as a group of CPEs that operate over the same channel and communicate over WDS to facilitate load balancing operations.

Each CPE supplies to the backend server 600 information pertaining to the MAC address and link quality to the neighboring CPEs discovered by it via scanning, wherein the link quality for instance is provided as a packet error rate (PER) or signal-to-noise ratio (SNR) as provided by the wireless drivers. The backend server 600 uses this information to initially organize the access devices into clusters or reorganize the clusters via a suitable clustering algorithm and then dispenses this information to the CPEs, in case of a reorganization preferably only to those affected by the reorganization.

Preferably an exclusive clustering algorithm, implying that each CPE can belong to one and only one cluster, is employed for clustering. The algorithm performs clustering in state space where the proximity between nodes is determined by the link quality between them. Algorithms like K-means clustering may be employed for this purpose.

For supporting the load balancing mechanism proposed by the invention the backend server 600 preferably comprises the following backend functionality:

- Receiving information from the CPEs regarding their MAC address, the MAC addresses of the scanned neighbors, the link connectivity to these neighbors, over remote management connections, for instance based on TR-069,
- Storing and maintaining the above information,
- Executing the clustering algorithm as described above,
- Issuing commands to the CPEs with instructions to switch to a specific channel and to set the public network name, and providing information pertaining to a list of CPEs with which the CPE can form a load balancing cluster, over remote management connections, for instance based on TR-069.

After having performed the above described scan, each CPE 110, 120 and 130 sends the data collected by means of the scan to the backend server 600, preferably also via a remote management connection, for instance based on TR-069. Each CPE therefore with advantage is adapted for the following functionality:

- Sending information on the MAC address of the CPE, the MAC addresses of the scanned neighbors and the link connectivity information to these neighbors to the backend server over a remote management connection,
- Receiving over a remote management connection and processing the commands from the backend server to switch to a specific radio channel and setting the public network name, and receiving over a remote management connection information pertaining to a list of CPEs with which the respective CPE can form a load balancing cluster.

In the following the CPE cluster formation, operation and maintenance is described in more detail.

A distributed protocol implemented at the CPEs forms, operates and maintains the CPE clusters. The members of a cluster communicate with their neighbors over WDS, once they have been set to operate at the same channel by the backend server. Each member of a cluster has one-hop connectivity to its neighbors which are potential candidates for performing load balancing. Each cluster member periodically exchanges with its one-hop neighbors heartbeat messages and congestion state and link-connectivity information over WDS.

In an exemplary embodiment six classes of traffic COT-1 to COT-6 are defined with COT-1 having highest priority and a decreasing priority with increasing number. For each of the six COTs the CPEs are provided with a respective COT buffer. The congestion state of the connection between a CPE and the Internet 500 is determined as a vector $c = \{c_1, c_2, c_3, c_4, c_5, c_6\}$, the elements of which are congestion bits of the CPE denoting whether the corresponding COT buffers are under congestion or not, wherein $c_i$ being set implies that the buffer corresponding to COT-i is under congestion.

The process of cluster formation, operation and maintenance is in the following delineated.

In pre-defined intervals periodic "HELLO" messages, which are embedded in MSDUs (MAC Service Data Units), are sent by cluster members over WDS with "To DS" and "From DS" bits set to 1 in the frame address field of the frames.

A "HELLO" message sent by a first CPE has the following information stored as a data structure:

- a time stamp comprising the current time,
- the sender MAC address and congestion level information of the sender, and
- a neighbor table comprising the neighbor MAC addresses, and for each neighbor the link quality as a bidirectional tuple, congestion level information and time stamps corresponding to the freshness of link quality and congestion level.

Therein, congestion level information for instance can comprise the above described congestion vector or information on the COT with highest priority of those COTs which are congested.

On receiving a "HELLO" message a neighbor, i.e. a second CPE which is a neighbor of said first CPE, performs the following actions:

- it verifies whether the sender, i.e. the first CPE, is a cluster member from the list of cluster members given to the second CPE by the backend server, and if it is not, the message is discarded,
- it updates its neighbor table with an entry for the first CPE's MAC and congestion level,
- it retrieves a quality measure for the link connectivity first CPE -> second CPE, for instance as a PER or SNR value, from drivers and stores this in the neighbor table against the sender MAC,
- it parses the link connectivity information from the neighbor table (second CPE -> first CPE) to itself, if the second CPE exists in the neighbor table contained in the message, and stores it against its own neighbor table entry for the first CPE, and
- if for a neighbor which has an entry in the own neighbor table the congestion level information in the received neighbor table has a newer time stamp, this information is updated as well.

For each neighbor in the own neighbor table a time interval is defined for receiving "HELLO" messages. If no "HELLO" message is received from a neighbor within the defined time interval, there is timer expiration and the neighbor table entry is then removed.

In the following the process of flow redirection is described in more detail.

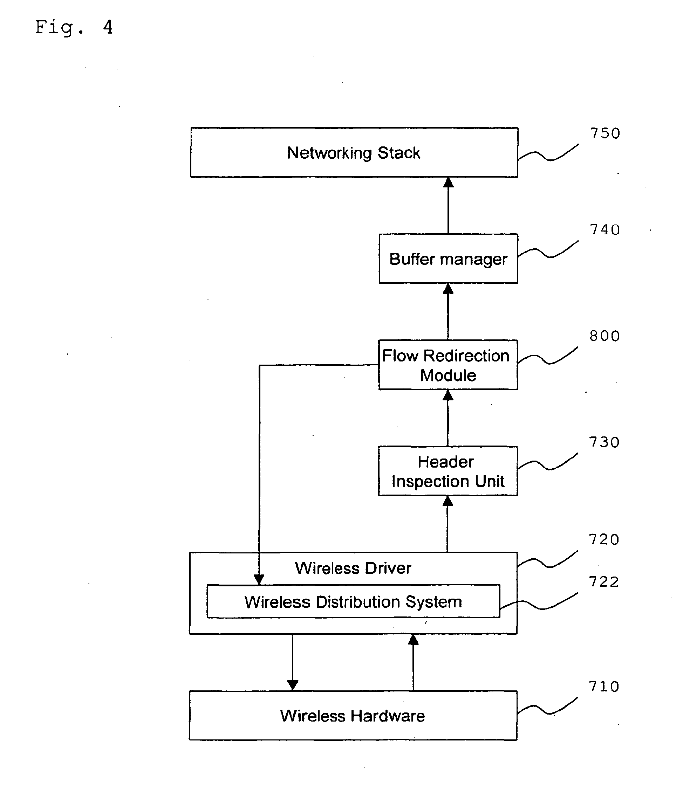

A CPE that redirects flows in the following is referred to as client. The neighbor to which the client redirects flows is referred to as server. Fig. 4 shows a system diagram for the client CPE with client-side functional components.

The wireless hardware 710 physically exchanges data with wireless communication devices and neighboring CPEs. The wireless hardware is controlled by wireless driver 720. For communicating with neighboring CPEs the wireless driver is provided with a component 722 adapted for controlling communication based on the Wireless Distribution System (WDS) according to the IEEE 802.11 standard.

The congestion detection is done via congestion feedback from the Buffer Manager 740 on COT buffers. A congestion vector, comprising six bits, reports which of the buffers respectively associated with COT-1 to COT-6 are congested. In case of congestion the corresponding bits in the vector are set. The congestion vector is available for access by the Flow Redirection Module 800.

The Flow Redirection Module 800 maintains a table with the set of currently active flows, a flow identified as <src IP, dst IP>. In the table also the COT associated with each flow is stored. A flow is identified via a Header Inspection Unit 730. All incoming packets are checked for their <src IP, dst IP>, and if a new flow is detected, i.e. a flow which does not already exist in the flow table, it is entered in the flow table. A flow is removed from the flow table after a timeout. The timeout is a time period during which, if no packet is received for a flow, the flow is assumed to be over. Each flow has a flow age timer associated with it. When this age timer reaches the timeout value, the flow is removed from the table.

On a new flow arrival the QoS class of the flow is identified via the COT classification. On congestion detection, the flow is redirected to a neighbor over WDS using the load balancing algorithm to be described in more detail below.

A table with the set of redirected flows and the MAC address of the corresponding server CPE is maintained in the client redirection table.

In Fig. 4 the direction of uplink traffic from wireless communication devices connected to the CPE to the Internet, represented by networking stack 750, is depicted by arrows, wherein flows redirected by the Flow Redirection Module 800 are first transmitted to a neighboring CPE over WDS.

The load balancing is initiated by the client CPE. The client functionality for this purpose includes detection of new flows as described above,

For this purpose the client detects new flows as described above, performs congestion detection as described above, selects an uplink neighbor (server) for flow redirection from the neighbor table as further described below, establishes an uplink WDS link to the server, and then performs flow redirection from client to server as described above.

In the following the termination of CPE load balancing on the client side is described.

If it is detected that the connection between the client and the Internet 500 is free of congestion via the congestion detection functionality as described above, no new flows are redirected. The flow redirection table is updated as the flows being redirected terminate, wherein the termination is detected via age expiry. When all the flows being redirected to a server end, the uplink WDS connection to the server is brought down.

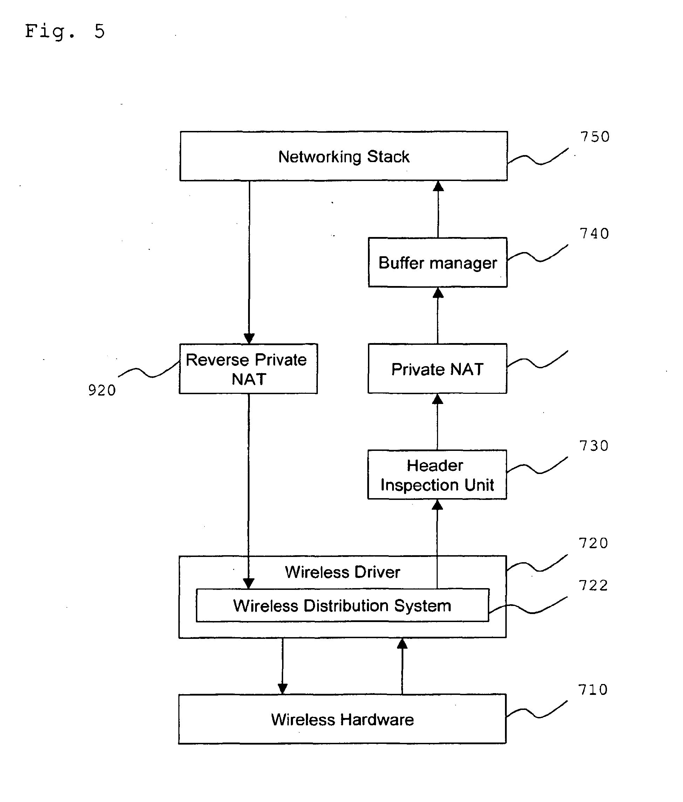

Fig. 5 shows a system diagram for the server CPE with server-side functional components. Components with identical reference signs as those shown in Fig. 4 have a similar function.

Each CPE maintains a distinct pool of private IP addresses for incoming traffic over WDS, also referred to as WDS-IP addresses, from the client CPE. A pNAT (private network address translation) functional module 910 changes the source IP of the WDS flows coming from a client to a local private IP address selected from the pool of WDS-IP addresses. A new flow is detected if it does not already exist in the redirected flow table, described in more detail below, and is assigned an IP address from the WDS pool. The matching is done based on the CPE MAC address and the source IP address of the flows. A list of flows being redirected from clients to this server is maintained in a redirected flow table which stores the client CPE MAC address, and - for each redirected flow of the client CPE - the source IP of the flow as allocated by the client and the corresponding local IP given to the flow by the server. Each flow also has an flow age timer associated with it, upon expiry of which the flow is removed from the table. A list of IP addresses in the WDS pool along with a Boolean that indicates whether the address is taken or not is also maintained. An rpNAT (reverse private NAT) functional module 920 performs the translation from server WDS-IP address to client IP address for the downlink traffic to be sent over WDS.

In the following a preferred embodiment for the flow redirection from a CPE to its cluster neighbors, when the connection between the CPE and the Internet 500 is under congestion, is described. The class of traffic type (e.g. voice, video, best effort in public network of EHS) which is under congestion is identified and accordingly a decision for redirection via WDS is made for new flows at the CPE depending on their type.

The load balancing is performed only for the traffic belonging to the public network. The designation COT-1 to COT-6 is in order of decreasing priority. Exemplary, if there is congestion indication from COT-4, all the new incoming flows for COT-4, COT-5 and COT-6 are redirected. If there is congestion indication from COT-5 and none from COT-4, or no COT-4 flows are registered, COT-5 and COT-6 flows are redirected. If there is congestion indication from COT-6 and none from COT-4 and COT-5, or else no COT-4 and COT-5 flows are registered, only COT-6 flows are redirected.

As described above, vector c = {$c_1$, $c_2$, $c_3$, $c_4$, $c_5$, $c_6$} is utilized comprising congestion bits of the CPE denoting whether the corresponding COT buffers are under congestion or not, wherein $c_i$ being set implies that COT-i is under congestion. A flow belonging to COT-i is redirected to a neighbor if any of the bits with index i or higher are set in the congestion vector, i.e. if any of the higher priority COT is under congestion.

The neighbor to which the flow belonging to COT-i is redirected is selected by determining that CPE among all neighbors, for which the following product yields the maximum value:

$$\prod_{j=1}^{i}(1 - c_j^n)\overline{L^n}$$

Therein $c_j^n$ is the congestion bit of neighbor n for COT-j and $\overline{L^n}$ is the average running link quality metric, for instance determined from PER and/or SNR values, to the neighbor n. If the above metric yields 0 for all neighbors, load balancing is not performed.

The running average is obtained by averaging the last K values of measured link quality weighted by an exponential function. The average link quality to neighbor n at current time t is given by

$$\overline{L_t}^n = \frac{1}{K}\sum_{k=0}^{K}L_{t-k}^n e^{\frac{-k}{K/2}}$$

Therein $L_t^n$ is the measured value of link quality to neighbor n at time t.

In the following, a preferred embodiment and the respective functionality for prioritization of voice and video applications according to bandwidths available in the private and public networks are described.

In an exemplary embodiment the public network comprises of two classes of users - gold and bronze. The voice and video applications only from the gold users of the public network are prioritized.

Three distinct classes of application are defined, namely video, voice and best effort, in both public and private networks. The mapping between these to COT buffers is given in the following table:

| Network | User | Traffic | COT |
|---|---|---|---|
| Private | any | Voice | 1 |
| Private | any | Video | 2 |
| Private | any | Best Effort | 3 |
| Public | Gold | Voice | 4 |
| Public | Gold | Video | 5 |

(continued)

| Network | User | Traffic | COT |
|---------|------|---------|-----|
| Public | Gold | Best Effort | 6 |
| Public | Bronze | Voice | 6 |
| Public | Bronze | Video | 6 |
| Public | Bronze | Best Effort | 6 |

Exemplary bandwidth partitioning is given in the table below:

| COT | Rate (%) | Ceiling (%) |
|-----|----------|-------------|
| 1 | $x \cdot p_{VO}$ | 100 |
| 2 | $x \cdot p_{VI}$ | 100 |
| 3 | $x \cdot (100\% - p_{VO} - p_{VI})$ | 100 |
| 4 | $(100\% - x) \cdot p_{GVO}$ | 100 |
| 5 | $(100\% - X) \cdot p_{GVI}$ | 100 |
| 6 | $(100\% - x) \cdot (100\% - p_{VO} - p_{VI})$ | 100 |

Therein, the private network is guaranteed to have x% of the uplink as well as downlink bandwidth at all times. Any amount of bandwidth unused by the private network can be used by the public network. $p_{vo}$ and $p_{vi}$ represent the percentage bandwidth respectively reserved for voice and video application in the private network. $p_{gvo}$ and $p_{gvi}$ represent the percentage bandwidths respectively reserved for voice and video applications of the gold members of the public network.

The above bandwidth partitioning can be achieved by accordingly setting the rate shaping parameters of an HTB scheduling.

In another exemplary embodiment a simplified configuration is utilized as given in the table below:

| Network | User | Traffic | COT |
|---------|------|---------|-----|
| Private | any | Voice (SIP) | 1 |
| Private | any | Best Effort | 3 |
| Public | any | Voice (SIP) | 4 |
| Public | any | Best Effort | 6 |

The applications can for instance be identified by port number information. The SIP voice traffic for example can be identified by noting the source IPs of the SIP clients which send packets with destination port number as 5060 (TCP/UDP).

**Claims**

1. A method for load balancing in a network access system (20) with a number of network access devices (110, 120, 130) each of which is connected to a network (500) and allows network access to communication devices connectable to said network access devices (110, 120, 130), wherein at least a subset of said number of network access devices (110, 120, 130) are wirelessly interconnected, comprising the steps of

   - organizing said number of network access devices (110, 120, 130) into at least one group of network access devices, wherein each group is associated with a selected transmission channel, so that network access devices of different groups do not interfere with each other, and further wherein said organization is controlled by a centralized network server (600) of the network,
   - sending a request from a communication device (204) to a first network access device (130) of said number of network access devices (110, 120, 130) for initiating a data flow between said communication device (204) and a destination node connected to said network (500),
   - determining a congestion state of the connection between the first network access device (130) and said network (500), and
   - if congestion of the connection between the first network access device (130) and said network (500) is detected,
   - selecting a second network access device (120) from said number of network access devices (110, 120, 130) from members of the same group depending on the quality of the respective wireless connection with the first network access device (130), and
   - establishing a data flow between the communication device (204) and the destination node, such that data originating from the communication device (204) is transmitted from the first network access device (130) via the second network access device (140) to the network (500) and data received from the network (500) is transmitted from the second network access device (140) via the first network access device (130) to the communication device (204).

2. The method of claim 1, wherein said network (500) is the Internet, said network access system (20) is a broadband Internet access system and the network access devices (110, 120, 130) are residential gateways comprising a wireless router and means for broadband connection to the Internet (500).

3. The method of claim 2, wherein said means for broadband connection comprises a DSL modem or a cable modem.

4. The method of any one of the preceding claims, wherein organizing said number of network access devices (110, 120, 130) into groups comprises the steps of

- detecting neighboring network access devices to which a wireless connection can be established by each network access device of said number of network access devices (110, 120, 130) and determining for each neighboring network access device an address and a quality measure of the respective wireless connection,
- transmitting from each network access device (110, 120, 130) to said centralized network server (600) a list of its neighboring network access devices comprising the respective addresses and quality measures,
- organizing the number of network access devices (110, 120, 130) into at least one group based on the received lists and a pre-defined clustering algorithm by the centralized network server (600), and
- transmitting to each network access device of said number of network access devices (110, 120, 130) respective group information by the centralized network server (600).

5. The method of claim 4, wherein said pre-defined clustering algorithm is an exclusive clustering algorithm, resulting in each of said number of network access devices (110, 120, 130) belonging to only one group.

6. The method of any one of the preceding claims, wherein

- the wireless connection between the network access devices is based on the wireless distribution system according to the IEEE 802.11 standard,
- the centralized network server (600) associates each of said groups with a selected transmission channel, and
- the group information transmitted to the network access devices (110, 120, 130) comprises information on the transmission channel associated with the respective group.

7. The method of any one of the preceding claims, wherein the step of organizing the network access devices (110, 120, 130) into groups is repeated at pre-defined times.

8. The method of any one of the preceding claims, wherein each network access device belonging to a group has one-hop connectivity to at least one other member of the same group.

9. The method of any one of the preceding claims, wherein each network access device belonging to a group has one-hop connectivity to all other members of the same group.

10. The method of any one of the preceding claims, wherein each network access device repeatedly determines a quality measure for the respective wireless connection to each of its neighboring network access devices belonging to the same group.

11. The method of any one of the preceding claims, comprising the steps of

- transmitting status information from each network access device of a group to each of its neighboring network access devices of the same group, wherein said status information comprises a time stamp, the sender address and the congestion state of the connection between the sender and the network (500),
- determining in each of said neighboring network access devices a quality measure of the wireless connection with the transmitting network access device by evaluating pre-defined transmission parameters, and
- storing in each network access device of a group a neighbor table, wherein each table entry of said neighbor table is associated with a neighboring network access device and comprises
- the address of the neighboring network access device,
- a quality measure of the wireless connection to the neighboring network access device, and
- the congestion state of the connection between the neighboring network access device and the network (500).

12. The method of claim 11, wherein said status information comprises said neighbor table.

13. The method of claim 11 or 12, wherein said pre-defined transmission parameters comprise a signal-to-noise ratio and/or a packet error rate.

14. The method of any one of the preceding claims, wherein the first network access device (130) selects the second network access device (120) from all of its neighboring network access devices (110, 120) belonging to the same group as the first network access device (130) depending on the congestion state of the connection between each neighboring network access device (110, 120) and the network (500) and the quality of the wireless connection to each neighboring network access device (110, 120).

15. The method of any one of the preceding claims, wherein the network access devices (110, 120, 130) are adapted for handling data flows of different classes of traffic, wherein each of said classes of traffic is associated with a different priority for the respective data flow, wherein the congestion state of the connection between a network access device and the network comprises congestion information for each of said different classes of traffic, and wherein congestion of the connection between the first network access device and said network is detected depending on the class of traffic of the requested data flow.

16. The method of claim 15, wherein for handling said data flows of different classes of traffic the network access devices (110, 120, 130) are provided with a corresponding number of data buffers and wherein the step of determining a congestion state of a connection between a network access device and the network comprises determining the state of said data buffers.

17. The method of any one of the preceding claims, wherein a fraction of the available bandwidth of the connection between a network access device and the network is reserved for a pre-defined group of communication devices and/or users.

18. The method of any one of the preceding claims, wherein a list of redirected data flows is maintained in each of said first (130) and second (120) network access devices.

19. The method of any one of the preceding claims, wherein the communication device (204) is a wireless communication device, with which the first network access (130) device is adapted to communicate wirelessly.

20. A network access device (110, 120, 130), connectable to a network, for providing network access for communication devices (201-206) connectable to the network access device (110, 120, 130), comprising

    - means for determining a congestion state of a connection between the network access device (110, 120, 130) and the network (500),
    - connecting means for wirelessly connecting to neighboring network access devices (110, 120, 130), and
    - flow redirection means (800, 910, 920) for redirecting selected data flows via selected ones of said neighboring network access devices (110, 120, 130),
    wherein said network access device is adapted to
    - detect neighboring network access devices,
    - automatically generate a neighbor list comprising for each detected neighboring network access device an address and a quality measure of the respective wireless connection and transmit said list to a centralized network server (600), and wherein said network access device comprises reception means for receiving group information from said centralized network server (600), wherein said group information associates the network access device with a group of network access devices, the group is associated with a selected transmission channel, and the selected ones of said neighboring network access devices is a member of the group.

21. The network access device of claim 20, wherein said connecting means is adapted for establishing a wireless connection based on the wireless distribution system according to the IEEE 802.11 standard.

22. The network access device of claim 20 or 21, provided as a residential gateway for providing broadband access to the Internet (500), comprising a wireless router and means for broadband connection to the Internet.

23. The network access device of claim 22, wherein said means for broadband connection comprises a DSL modem or a cable modem.

24. The network access device of any one of claims 20 to 23, wherein the flow redirection means (800) is adapted to select a network access device (110, 120, 130) for data flow redirection from detected neighboring network access devices (110, 120, 130) belonging to the same group depending on

    - information on congestion states received from the neighboring network access devices (110, 120, 130) of the same group, and
    - the connection quality to the neighboring network access devices (110, 120, 130) of the same group.

25. The network access device of any one of claims 20 to 24, provided with a pre-defined number of data buffers for handling data flows of a corresponding number of different classes of traffic, wherein each of said classes of traffic is associated with a different priority for the respective data flow, and wherein the means for determining a congestion state is adapted to determine a congestion state comprising congestion information for each of said different classes of traffic by determining the state of said data buffers.

26. The network access device of any one of claims 20 to 25, adapted for reserving a fraction of the available bandwidth of its connection to the network (500) for a pre-defined group of communication devices and/or users.

27. The network access device of any one of claims 20 to 26, comprising storage means for storing redirection tables with parameters of redirected data flows, comprising separate tables for data flows redirected by the network access device itself and data flows redirected by neighboring network access devices.

28. The network access device of any one of claims 20 to 27, adapted for communication with wireless communication devices (201-206).

29. A network access system (20), comprising a number of network access devices (110, 120, 130) and at least one centralized network server (600) for organizing said number of network access devices (110, 120, 130) into groups of network access devices, wherein said number of network access devices comprises at least two network access devices (110, 120, 130) according to any one of claims 20 to 28, wherein said centralized network server (600) comprises

     - reception means for receiving from each of said number of network access devices (110, 120, 130) a neighbor list, said neighbor list comprising addresses and wireless connectivity information of each network access device neighboring the respective sending network access device,
     - group determining means for organizing said number of network access devices into groups of network access devices based on a pre-defined clustering algorithm and on received neighbor lists, and
     - transmitting means for transmitting group information to each of said number of network access devices.

30. The network access system of claim 29, wherein said pre-defined clustering algorithm is an exclusive clustering algorithm, resulting in each of said number of network access devices (110, 120, 130) belonging to only one group.

31. The network access system of claim 29 or 30, wherein the centralized network server (600) is adapted to communicate with the network access devices (110, 120, 130) by means of a remote management connection according to the DSL Forum Technical Report TR-069.

32. The network access system of any one of claims 29 to 31, wherein the centralized network server (600) is adapted to transmit a trigger signal to a network access device (110, 120, 130) for initiating the generation and transmission of a neighbor list.

33. The network access system of any one of claims 29 to 32, wherein said pre-defined clustering algorithm is adapted to form groups of network access devices, so that each network access device belonging to a group has one-hop connectivity to at least one other member of the same group.

34. The network access system of any one of claims 29 to 33, wherein said pre-defined clustering algorithm is adapted to form groups of network access devices, so that each network access device belonging to a group has one-hop connectivity to all other members of the same group.

**Patentansprüche**

1. Verfahren zum Lastausgleich in einem Netzzugangssystem (20) mit einer Anzahl von Netzzugangseinrichtungen (110, 120, 130), die jeweils mit einem Netzwerk (500) verbunden sind und Netzzugriff für Kommunikationseinrichtungen ermöglichen, die mit den Netzzugangseinrichtungen (110, 120, 130) verbindbar sind, wobei zumindest eine Teilmenge der Anzahl von Netzzugangseinrichtungen (110, 120, 130) untereinander drahtlos verbunden ist, mit folgenden Schritten:

     - Einordnen der Anzahl von Netzzugangseinrichtungen (110, 120, 130) in zumindest eine Gruppe von Netzzugangseinrichtungen, wobei jeder Gruppe ein ausgewählter Übertragungskanal zugeordnet ist, so dass Netzzugangseinrichtungen von verschiedenen Gruppen sich nicht gegenseitig stören und wobei ferner die Einordnung von einem zentralen Netzwerkserver (600) des Netzwerks gesteuert wird,
     - Senden einer Anforderung von einer Kommunikationseinrichtung (204) an eine erste Netzzugangseinrichtung (130) der Anzahl von Netzzugangseinrichtungen (110, 120, 130) zum Auslösen eines Datenflusses zwischen der Kommunikationseinrichtung (204) und einem mit dem Netzwerk (500) verbundenen Zielknoten,
     - Bestimmen eines Überlastungszustands der Verbindung zwischen der ersten Netzzugangseinrichtung (130) und dem Netzwerk (500), und
     - wenn eine Überlastung der Verbindung zwischen der ersten Netzzugangseinrichtung (130) und dem Netzwerk (500) erkannt wird,
     - Auswählen einer zweiten Netzzugangseinrichtung (120) aus der Anzahl von Netzzugangseinrichtungen (110, 120, 130) von Mitgliedern derselben Gruppe in Abhängigkeit von der Qualität der jeweiligen Funkverbindung mit der ersten Netzzugangseinrichtung (130), und
     - Herstellen eines Datenflusses zwischen der Kommunikationseinrichtung (204) und dem Zielknoten, so dass Daten, die von der Kommunikationseinrichtung (204) stammen, von der ersten Netzzugangseinrichtung (130) über die zweite Netzzugangseinrichtung (140) an das Netzwerk (500) übertragen werden und Daten, die aus dem Netzwerk (500) empfangen werden, von der zweiten Netzzugangseinrichtung (140) über die erste Netzzugangseinrichtung (130) an die Kommunikationseinrichtung (204) übertragen werden.

2. Verfahren nach Anspruch 1, wobei das Netzwerk (500) das Internet ist, wobei das Netzzugangssystem (20) ein Breitband-Internet-Zugangssystem ist und die Netzzugangseinrichtungen (110, 120, 130) Heim-Gateways sind, die einen drahtlosen Router sowie Einrichtungen zur Breitbandverbindung mit dem Internet (500) umfassen.

3. Verfahren nach Anspruch 2, wobei die Einrichtungen zur Breitbandverbindung ein DSL-Modem oder ein Kabelmodem umfassen.

4. Verfahren nach einem der vorhergehenden Ansprüche, wobei das Einordnen der Anzahl von Netzzugangseinrichtungen (110, 120, 130) in Gruppen folgende Schritte umfasst:

  - Erkennen von benachbarten Netzzugangseinrichtungen, zu denen von jeder der Netzzugangseinrichtungen der Anzahl von Netzzugangseinrichtungen (110, 120, 130) eine drahtlose Verbindung hergestellt werden kann, und Bestimmen einer Adresse und eines Qualitätsmaßes der jeweiligen drahtlosen Verbindung für jede benachbarte Netzzugangseinrichtung,
  - Übertragen, von jeder Netzzugangseinrichtung (110, 120, 130) an den zentralen Netzwerkserver (600), einer Liste der ihr benachbarten Netzzugangseinrichtungen einschließlich der jeweiligen Adressen und Qualitätsmaße,
  - Einordnen der Anzahl von Netzzugangseinrichtungen (110, 120, 130) in zumindest eine Gruppe auf Basis der empfangenen Listen und eines vordefinierten Gruppierungsalgorithmus durch den zentralen Netzwerkserver (600), und
  - Übertragen entsprechender Gruppeninformationen von dem zentralen Netzwerkserver (600) an jede Netzzugangseinrichtung der Anzahl von Netzzugangseinrichtungen (110, 120, 130).

5. Verfahren nach Anspruch 4, wobei der vordefinierte Gruppierungsalgorithmus ein exklusiver Gruppierungsalgorithmus ist, der dazu führt, das jede der Anzahl von Netzzugangseinrichtungen (110, 120, 130) zu nur einer Gruppe gehört.

6. Verfahren nach einem der vorhergehenden Ansprüche, wobei

  - die drahtlose Verbindung zwischen den Netzzugangseinrichtungen auf dem Funkverteilsystem gemäß der Norm IEEE 802.11 basiert,
  - der zentrale Netzwerkserver (600) jeder der Gruppen einen ausgewählten Übertragungskanal zuordnet, und
  - die an die Netzzugangseinrichtungen (110, 120, 130) übertragenen Gruppeninformationen Informationen zu dem der entsprechenden Gruppe zugeordneten Übertragungskanal umfassen.

7. Verfahren nach einem der vorhergehenden Ansprüche, wobei der Schritt des Einordnens der Netzzugangseinrichtungen (110, 120, 130) in Gruppen zu vorbestimmten Zeitpunkten wiederholt wird.

8. Verfahren nach einem der vorhergehenden Ansprüche, wobei jede zu einer Gruppe gehörende Netzzugangseinrichtung Single-Hop-Konnektivität zu mindestens einem anderen Mitglied derselben Gruppe aufweist.

9. Verfahren nach einem der vorhergehenden Ansprüche, wobei jede zu einer Gruppe gehörende Netzzugangseinrichtung Single-Hop-Konnektivität zu allen anderen Mitgliedern derselben Gruppe aufweist.

10. Verfahren nach einem der vorhergehenden Ansprüche, wobei jede Netzzugangseinrichtung wiederholt ein Qualitätsmaß für die jeweilige Funkverbindung zu jeder der ihr benachbarten Netzzugangseinrichtungen, die zu derselben Gruppe gehören, bestimmt.

11. Verfahren nach einem der vorhergehenden Ansprüche, welches folgende Schritte umfasst:

  - Senden von Statusinformationen von jeder Netzzugangseinrichtung einer Gruppe zu jeder der ihr benachbarten Netzzugangseinrichtungen derselben Gruppe, wobei die Statusinformationen einen Zeitstempel, die Absenderadresse und den Überlastungszustand der Verbindung zwischen dem Absender und dem Netzwerk umfasst (500),
  - Bestimmen, in jeder der benachbarten Netzzugangseinrichtungen, eines Qualitätsmaßes für die drahtlose Verbindung zu der sendenden Netzzugangseinrichtung durch Auswertung vordefinierter Übertragungsparameter, und
  - Speichern einer Nachbartabelle in jeder Netzzugangseinrichtung einer Gruppe, wobei jeder Tabelleneintrag der Nachbartabelle einer benachbarten Netzzugangseinrichtung zugeordnet ist und umfasst:
  - die Adresse der benachbarten Netzzugangseinrichtung,
  - ein Qualitätsmaß für die drahtlose Verbindung zu der benachbarten Netzzugangseinrichtung und

- den Überlastungszustand der Verbindung zwischen der benachbarten Netzzugangseinrichtung und dem Netzwerk (500).

12. Verfahren nach Anspruch 11, wobei die Statusinformationen die Nachbartabelle umfasst.

13. Verfahren nach Anspruch 11 oder 12, wobei die vorbestimmten Übertragungsparameter ein Signal-zu-Rausch-Verhältnis und/oder eine Paketfehlerrate umfassen.

14. Verfahren nach einem der vorhergehenden Ansprüche, wobei die erste Netzzugangseinrichtung (130) die zweite Netzzugangseinrichtung (120) aus allen ihr benachbarten Netzzugangseinrichtungen (110, 120), die zu derselben Gruppe wie die erste Netzzugangseinrichtung (130) gehören, in Abhängigkeit von dem Überlastungszustand der Verbindung zwischen jeder benachbarten Netzzugangseinrichtung (110, 120) und dem Netzwerk (500) sowie der Qualität der Funkverbindung zu jeder benachbarten Netzzugangseinrichtung (110, 120) auswählt.

15. Verfahren nach einem der vorhergehenden Ansprüche, wobei die Netzzugangseinrichtungen (110, 120, 130) dazu ausgebildet sind, Datenflüsse unterschiedlicher Verkehrsklassen zu organisieren, wobei jeder der Verkehrsklassen eine andere Priorität für den entsprechenden Datenfluss zugeordnet ist, wobei der Überlastungszustand der Verbindung zwischen einer Netzzugangseinrichtung und dem Netzwerk Überlastungsinformationen für jede der unterschiedlichen Verkehrsklassen umfasst, und wobei eine Überlastung der Verbindung zwischen der ersten Netzzugangseinrichtung und dem Netzwerk in Abhängigkeit von der Verkehrsklasse des angeforderten Datenflusses festgestellt wird.

16. Verfahren nach Anspruch 15, wobei die Netzzugangseinrichtungen (110, 120, 130) zur Organisation der Datenflüsse unterschiedlicher Verkehrsklassen eine entsprechende Anzahl von Datenpuffern aufweisen und wobei der Schritt des Bestimmens eines Überlastungszustands einer Verbindung zwischen einer Netzzugangseinrichtung und dem Netzwerk das Bestimmen des Zustands der Datenpuffer umfasst.

17. Verfahren nach einem der vorhergehenden Ansprüche, wobei ein Bruchteil der verfügbaren Bandbreite der Verbindung zwischen einer Netzzugangseinrichtung und dem Netzwerk für eine vordefinierte Gruppe von Kommunikationseinrichtungen und/oder Nutzern reserviert wird.

18. Verfahren nach einem der vorhergehenden Ansprüche, wobei in der ersten (130) und der zweiten (120) Netzzugangseinrichtung jeweils eine Liste von umgeleiteten Datenflüssen unterhalten wird.

19. Verfahren nach einem der vorhergehenden Ansprüche, wobei die Kommunikationseinrichtung (204) eine drahtlose Kommunikationseinrichtung ist, die zur drahtlosen Kommunikation mit der ersten Netzzugangseinrichtung (130) ausgelegt ist.

20. Netzzugangseinrichtung (110, 120, 130), die mit einem Netzwerk verbindbar ist, um Netzzugang für Kommunikationseinrichtungen (201 - 206) bereitzustellen, die mit der Netzzugangseinrichtung (110, 120, 130) verbindbar sind, umfassend:

- eine Einrichtung zum Bestimmen eines Überlastungszustands einer Verbindung zwischen der Netzzugangseinrichtung (110, 120, 130) und dem Netzwerk (500),
- eine Verbindungseinrichtung zum drahtlosen Verbinden mit benachbarten Netzzugangseinrichtungen (110, 120, 130) und
- eine Datenfluss-Umleiteinrichtung (800, 910, 920) zum Umleiten ausgewählter Datenflüsse über ausgewählte der benachbarten Netzzugangseinrichtungen (110, 120, 130), wobei die Netzzugangseinrichtung ausgebildet ist zum
- Erkennen benachbarter Netzzugangseinrichtungen,
- automatischen Erzeugen einer Nachbarliste, die für jede erkannte benachbarte Netzzugangseinrichtung eine Adresse und ein Qualitätsmaß der jeweiligen Funkverbindung umfasst, und Senden der Liste an einen zentralen Netzwerkserver (600), und wobei die Netzzugangseinrichtung eine Empfangseinrichtung zum Empfangen von Gruppeninformationen von dem zentralen Netzwerkserver (600) umfasst, wobei die Gruppeninformationen die Netzzugangseinrichtung einer Gruppe von Netzzugangseinrichtungen zuordnen, wobei der Gruppe ein ausgewählter Übertragungskanal zugeordnet ist und wobei die ausgewählte der benachbarten Netzzugangseinrichtungen Mitglied der Gruppe ist.

21. Netzzugangseinrichtung nach Anspruch 20, wobei die Verbindungseinrichtung zur Herstellung einer Funkverbindung basierend auf dem Funkverteilsystem gemäß der Norm IEEE 802.11 ausgebildet ist.

22. Netzzugangseinrichtung nach Anspruch 20 oder 21, wobei diese als Heim-Gateway zur Bereitstellung von Breitbandzugang zum Internet (500) ausgebildet ist, wobei sie einen Funk-Router sowie Einrichtungen zur Breitbandverbindung mit dem Internet umfasst.

**23.** Netzzugangseinrichtung nach Anspruch 22, wobei die Einrichtungen zur Breitbandverbindung ein DSL-Modem oder ein Kabelmodem umfassen.

**24.** Netzzugangseinrichtung nach einem der Ansprüche 20 bis 23, wobei die Datenfluss-Umleiteinrichtung (800) dazu ausgebildet ist, eine Netzzugangseinrichtung (110, 120, 130) aus erkannten benachbarten Netzzugangseinrichtungen (110, 120, 130), die derselben Gruppe angehören, für eine Datenflussumleitung auszuwählen, und zwar in Abhängigkeit von

- Informationen zu Überlastungszuständen, die von den benachbarten Netzzugangseinrichtungen (110, 120, 130) derselben Gruppe erhalten wurden, und
- der Verbindungsqualität zu den benachbarten Netzzugangseinrichtungen (110, 120, 130) derselben Gruppe.

**25.** Netzzugangseinrichtung nach einem der Ansprüche 20 bis 24, wobei diese eine vorbestimmte Anzahl von Datenpuffern zur Organisation von Datenflüssen für eine entsprechende Anzahl von unterschiedlichen Verkehrsklassen aufweist, wobei jeder der Verkehrsklassen eine unterschiedliche Priorität für den jeweiligen Datenfluss zugeordnet ist, und wobei die Einrichtungen zum Bestimmen eines Überlastungszustands dazu ausgebildet sind, einen Überlastungszustand mit Überlastungsinformationen für jede der unterschiedlichen Verkehrsklassen durch Bestimmen des Zustands der Datenpuffer zu bestimmen.

**26.** Netzzugangseinrichtung nach einem der Ansprüche 20 bis 25, wobei diese dazu ausgebildet ist, einen Bruchteil der verfügbaren Bandbreite ihrer Verbindung zu dem Netzwerk (500) für eine vorbestimmte Gruppe von Kommunikationseinrichtungen und/oder Nutzern zu reservieren.

**27.** Netzzugangseinrichtung nach einem der Ansprüche 20 bis 26, wobei diese Speichereinrichtungen zum Speichern von Umleitungstabellen mit Parametern umgeleiteter Datenflüsse umfasst, welche getrennte Tabellen für Datenflüsse, die durch die Netzzugangseinrichtung selbst umgeleitet werden, und für Datenflüsse, die durch benachbarte Netzzugangseinrichtungen umgeleitet werden, umfassen.

**28.** Netzzugangseinrichtung nach einem der Ansprüche 20 bis 27, wobei diese zur Kommunikation mit drahtlosen Kommunikationseinrichtungen (201 - 206) ausgebildet ist.

**29.** Netzzugangssystem (20), welches eine Anzahl von Netzzugangseinrichtungen (110, 120, 130) und mindestens einen zentralen Netzwerkserver (600) zum Einordnen der Anzahl von Netzzugangseinrichtungen (110, 120, 130) in Gruppen von Netzzugangseinrichtungen umfasst, wobei die Anzahl von Netzzugangseinrichtungen mindestens zwei Netzzugangseinrichtungen (110, 120, 130) gemäß einem der Ansprüche 20 bis 28 umfasst, wobei der zentrale Netzwerkserver (600) umfasst:

- eine Empfangseinrichtung zum Empfang einer Nachbarliste von jeder der Anzahl von Netzzugangseinrichtungen (110, 120, 130), wobei die Nachbarliste Adressen und Informationen zur Funkkonnektivität von jeder Netzzugangseinrichtung, die der entsprechenden sendenden Netzzugangseinrichtung benachbart ist, umfasst,
- eine Gruppenbestimmungseinrichtung zum Einordnen der Anzahl von Netzzugangseinrichtungen in Gruppen von Netzzugangseinrichtungen auf Basis eines vordefinierten Gruppierungsalgorithmus und den empfangenen Nachbarlisten und
- eine Sendeeinrichtung zum Übertragen von Gruppeninformationen an jede der Anzahl von Netzzugangseinrichtungen.

**30.** Netzzugangssystem nach Anspruch 29, wobei der vordefinierte Gruppierungsalgorithmus ein exklusiver Gruppierungsalgorithmus ist, der dazu führt, das jede der Anzahl von Netzzugangseinrichtungen (110, 120, 130) zu nur einer Gruppe gehört.

**31.** Netzzugangssystem nach Anspruch 29 oder 30, wobei der zentrale Netzwerkserver (600) dazu ausgebildet ist, mit den Netzzugangseinrichtungen (110, 120, 130) mithilfe einer Fernverwaltungsverbindung gemäß DSL Forum Technical Report TR-069 zu kommunizieren.

**32.** Netzzugangssystem nach einem der Ansprüche 29 bis 31, wobei der zentrale Netzwerkserver (600) dazu ausgebildet ist, ein Auslösesignal an eine Netzzugangseinrichtung (110, 120, 130) zu senden, um die Erzeugung und Übertragung einer Nachbarliste auszulösen.

**33.** Netzzugangssystem nach einem der Ansprüche 29 bis 32, wobei der vordefinierte Gruppierungsalgorithmus dazu ausgebildet ist, Gruppen von Netzzugangseinrichtungen zu bilden, so dass jede zu einer Gruppe gehörende Netzzugangseinrichtung Single-Hop-Konnektivität zu mindestens einem anderen Mitglied derselben Gruppe aufweist.

**34.** Netzzugangssystem nach einem der Ansprüche 29 bis 33, wobei der vordefinierte Gruppierungsalgorithmus dazu ausgebildet ist, Gruppen von Netzzugangseinrichtungen zu bilden, so dass jede zu einer Gruppe gehörende Netzzugangseinrichtung Single-Hop-Konnektivität zu allen anderen Mitgliedern derselben Gruppe aufweist.

## Revendications

1. Procédé pour l'équilibrage de charge dans un système d'accès au réseau (20) avec un nombre de dispositifs d'accès au réseau (110, 120, 130) dont chacun est connecté à un réseau (500) et permet l'accès au réseau à des dispositifs de communication connectables auxdits dispositifs d'accès au réseau (110, 120, 130), dans lequel au moins un sous-ensemble dudit nombre de dispositifs d'accès au réseau (110, 120, 130) sont interconnectés de manière sans fil, comprenant les étapes consistant à

    - organiser ledit nombre de dispositifs d'accès au réseau (110, 120, 130) en au moins un groupe de dispositifs d'accès au réseau, chaque groupe étant associé à une voie de transmission sélectionnée, de sorte que des dispositifs d'accès au réseau de groupes différents ne se perturbent pas les uns les autres, et en outre ladite organisation étant contrôlée par un serveur de réseau centralisé (600) du réseau,
    - envoyer une demande d'un dispositif de communication (204) à un premier dispositif d'accès au réseau (130) dudit nombre de dispositifs d'accès au réseau (110, 120, 130) pour initier un flux de données entre ledit dispositif de communication (204) et un noeud de destination connecté audit réseau (500),
    - déterminer un état d'encombrement de la connexion entre le premier dispositif d'accès au réseau (130) et ledit réseau (500), et
    - si un encombrement de la connexion entre le premier dispositif d'accès au réseau (130) et ledit réseau (500) est détecté,
    - sélectionner un second dispositif d'accès au réseau (120) parmi ledit nombre de dispositifs d'accès au réseau (110, 120, 130) parmi des membres du même groupe en fonction de la qualité de la connexion sans fil respective avec le premier dispositif d'accès au réseau (130), et
    - établir un flux de données entre le dispositif de communication (204) et le noeud de destination, de sorte que des données provenant du dispositif de communication (204) soient transmises du premier dispositif d'accès au réseau (130) via le second dispositif d'accès au réseau (140) au réseau (500) et que des données reçues du réseau (500) soient transmises du second dispositif d'accès au réseau (140) via le premier dispositif d'accès au réseau (130) au dispositif de communication (204).

2. Procédé selon la revendication 1, dans lequel ledit réseau (500) est Internet, ledit système d'accès au réseau (20) est un système d'accès à Internet à large bande et les dispositifs d'accès au réseau (110, 120, 130) sont des passerelles résidentielles comprenant un routeur sans fil et des moyens pour une connexion à large bande à Internet (500).

3. Procédé selon la revendication 2, dans lequel lesdits moyens pour une connexion à large bande comprennent un modem DSL ou un modem câble.

4. Procédé selon l'une quelconque des revendications précédentes, dans lequel l'organisation dudit nombre de dispositifs d'accès au réseau (110, 120, 130) en groupes comprend les étapes consistant à

    - détecter des dispositifs d'accès au réseau voisins auxquels une connexion sans fil peut être établie par chaque dispositif d'accès au réseau dudit nombre de dispositifs d'accès au réseau (110, 120, 130) et déterminer pour chaque dispositif d'accès au réseau voisin une adresse et une mesure de qualité de la connexion sans fil respective,
    - transmettre, de chaque dispositif d'accès au réseau (110, 120, 130) audit serveur de réseau centralisé (600), une liste de ses dispositifs d'accès au réseau voisins comprenant les adresses et mesures de qualité respectives,
    - organiser le nombre de dispositifs d'accès au réseau (110, 120, 130) en au moins un groupe sur la base des listes reçues et d'un algorithme de mise en grappe prédéfini par le serveur de réseau centralisé (600), et
    - transmettre à chaque dispositif d'accès au réseau dudit nombre de dispositifs d'accès au réseau (110, 120, 130) des informations de groupe respectives par le serveur de réseau centralisé (600).

5. Procédé selon la revendication 4, dans lequel ledit algorithme de mise en grappe prédéfini est un algorithme de mise en grappe exclusif, entraînant le fait que chacun dudit nombre de dispositifs d'accès au réseau (110, 120, 130) appartienne à un seul groupe.

6. Procédé selon l'une quelconque des revendications précédentes, dans lequel :

    - la connexion sans fil entre les dispositifs d'accès au réseau est basée sur le système de distribution sans fil selon la norme IEEE 802.11,
    - le serveur de réseau centralisé (600) associe chacun desdits groupes à un canal voie de transmission sélectionné, et
    - les informations de groupe transmises aux dispositifs d'accès au réseau (110, 120, 130) comprennent des informations sur le canal de transmission associé au groupe respectif.

7. Procédé selon l'une quelconque des revendications précédentes, dans lequel l'étape consistant à organiser les dispositifs d'accès au réseau (110, 120, 130) en groupes est répétée à des temps prédéfinis.

8. Procédé selon l'une quelconque des revendications précédentes, dans lequel chaque dispositif d'accès au réseau appartenant à un groupe a une connectivité à un seul bond à au moins un autre membre du même groupe.

9. Procédé selon l'une quelconque des revendications précédentes, dans lequel chaque dispositif d'accès au réseau appartenant à un groupe a une connectivité à un seul bond à tous les autres membres du même groupe.

10. Procédé selon l'une quelconque des revendications précédentes, dans lequel chaque dispositif d'accès au réseau détermine de façon répétée une mesure de qualité pour la connexion sans fil respective à chacun de ses dispositifs d'accès au réseau voisins appartenant au même groupe.

11. Procédé selon l'une quelconque des revendications précédentes, comprenant les étapes consistant à :

- transmettre des informations de statut de chaque dispositif d'accès au réseau d'un groupe à chacun de ses dispositifs d'accès au réseau voisins du même groupe, lesdites informations de statut comprenant une estampille temporelle, l'adresse de l'émetteur et l'état d'encombrement de la connexion entre l'émetteur et le réseau (500),
- déterminer, dans chacun desdits dispositifs d'accès au réseau voisins, une mesure de qualité de la connexion sans fil avec le dispositif d'accès au réseau transmetteur en évaluant des paramètres de transmission prédéfinis, et
- stocker, dans chaque dispositif d'accès au réseau d'un groupe, une table de voisins, chaque entrée de table de ladite table de voisins étant associée à un dispositif d'accès au réseau voisin et comprenant :
- l'adresse du dispositif d'accès au réseau voisin,
- une mesure de qualité de la connexion sans fil au dispositif d'accès au réseau voisin, et
- l'état d'encombrement de la connexion entre le dispositif d'accès au réseau voisin et le réseau (500).

12. Procédé selon la revendication 11, dans lequel lesdites informations de statut comprennent ladite table de voisins.

13. Procédé selon la revendication 11 ou 12, dans lequel lesdits paramètres de transmission prédéfinis comprennent un rapport signal sur bruit et/ou un taux d'erreur de paquet.

14. Procédé selon l'une quelconque des revendications précédentes, dans lequel le premier dispositif d'accès au réseau (130) sélectionne le second dispositif d'accès au réseau (120) parmi la totalité de ses dispositifs d'accès au réseau voisins (110, 120) appartenant au même groupe que le premier dispositif d'accès au réseau (130) en fonction de l'état d'encombrement de la connexion entre chaque dispositif d'accès au réseau voisin (110, 120) et le réseau (500) et de la qualité de la connexion sans fil à chaque dispositif d'accès au réseau voisin (110, 120).

15. Procédé selon l'une quelconque des revendications précédentes, dans lequel les dispositifs d'accès au réseau (110, 120, 130) sont adaptés pour prendre en charge des flux de données de différentes classes de trafic, dans lequel chacune desdites classes de trafic est associée à une priorité différente pour le flux de données respectif, dans lequel l'état d'encombrement de la connexion entre un dispositif d'accès au réseau et le réseau comprend des informations d'encombrement pour chacune desdites différentes classes de trafic, et dans lequel un encombrement de la connexion entre le premier dispositif d'accès au réseau et ledit réseau est détecté en fonction de la classe de trafic du flux de données demandé.

16. Procédé selon la revendication 15, dans lequel, pour prendre en charge lesdits flux de données de différentes classes de trafic, les dispositifs d'accès au réseau (110, 120, 130) sont pourvus d'un nombre correspondant de tampons de données, et dans lequel l'étape consistant à déterminer un état d'encombrement d'une connexion entre un dispositif d'accès au réseau et le réseau comprend la détermination de l'état desdits tampons de données.

17. Procédé selon l'une quelconque des revendications précédentes, dans lequel une fraction de la largeur de bande disponible de la connexion entre un dispositif d'accès au réseau et le réseau est réservée pour un groupe prédéfini de dispositifs de communication et/ou d'utilisateurs.

18. Procédé selon l'une quelconque des revendications précédentes, dans lequel une liste de flux de données redirigés est maintenue dans chacun desdits premier (130) et second (120) dispositifs d'accès au réseau.

**19.** Procédé selon l'une quelconque des revendications précédentes, dans lequel le dispositif de communication (204) est un dispositif de communication sans fil avec lequel le premier dispositif d'accès au réseau (130) est adapté pour communiquer de manière sans fil.

**20.** Dispositif d'accès au réseau (110, 120, 130), connectable à un réseau, pour fournir un accès au réseau pour des dispositifs de communication (201-206) connectables au dispositif d'accès au réseau (110, 120, 130), comprenant :

- des moyens pour déterminer un état d'encombrement d'une connexion entre le dispositif d'accès au réseau (110, 120, 130) et le réseau (500),
- des moyens de connexion pour se connecter sans fil à des dispositifs d'accès au réseau voisins (110, 120, 130), et
- des moyens de redirection de flux (800, 910, 920) pour rediriger des flux de données sélectionnés via des dispositifs sélectionnés parmi lesdits dispositifs d'accès au réseau voisins (110, 120, 130),

ledit dispositif d'accès au réseau étant adapté pour :

- détecter des dispositifs d'accès au réseau voisins,
- générer automatiquement une liste de voisins comprenant, pour chaque dispositif d'accès au réseau voisin détecté, une adresse et une mesure de qualité de la connexion sans fil respective, et transmettre ladite liste à un serveur de réseau centralisé (600), et ledit dispositif d'accès au réseau comprenant des moyens de réception pour recevoir des informations de groupe en provenance dudit serveur de réseau centralisé (600), lesdites informations de groupe associant le dispositif d'accès au réseau à un groupe de dispositifs d'accès au réseau, le groupe étant associé à un canal de transmission sélectionné, et les dispositifs sélectionnés parmi les dispositifs d'accès au réseau voisins étant membres du groupe.

**21.** Dispositif d'accès au réseau selon la revendication 20, dans lequel lesdits moyens de connexion sont adaptés pour établir une connexion sans fil sur la base du système de distribution sans fil selon la norme IEEE 802.11.

**22.** Dispositif d'accès au réseau selon la revendication 20 ou 21, prévu comme une passerelle résidentielle pour fournir un accès à large bande à Internet (500), comprenant un routeur sans fil et des moyens pour une connexion à large bande à Internet.

**23.** Dispositif d'accès au réseau selon la revendication 22, dans lequel lesdits moyens pour une connexion à large bande comprennent un modem DSL ou un modem câble.

**24.** Dispositif d'accès au réseau selon l'une quelconque des revendications 20 à 23, dans lequel les moyens de redirection de flux (800) sont adaptés pour sélectionner un dispositif d'accès au réseau (110, 120, 130) pour la redirection de flux de données parmi des dispositifs d'accès au réseau voisins (110, 120, 130) détectés appartenant au même groupe en fonction :

- d'informations sur des états d'encombrement reçues des dispositifs d'accès au réseau voisins (110, 120, 130) du même groupe, et
- de la qualité de connexion aux dispositifs d'accès au réseau voisins (110, 120, 130) du même groupe.

**25.** Dispositif d'accès au réseau selon l'une quelconque des revendications 20 à 24, pourvu d'un nombre prédéfini de tampons de données pour prendre en charge des flux de données d'un nombre correspondant de différentes classes de trafic, dans lequel chacune desdites classes de trafic est associée à une priorité différente pour le flux de données respectif, et dans lequel les moyens pour déterminer un état d'encombrement sont adaptés pour déterminer un état d'encombrement comprenant des informations d'encombrement pour chacune desdites différentes classes de trafic en déterminant l'état desdits tampons de données.

**26.** Dispositif d'accès au réseau selon l'une quelconque des revendications 20 à 25, adapté pour réserver une fraction de la largeur de bande disponible de sa connexion au réseau (500) pour un groupe prédéfini de dispositifs de communication et/ou d'utilisateurs.

**27.** Dispositif d'accès au réseau selon l'une quelconque des revendications 20 à 26, comprenant des moyens de stockage pour stocker des tables de redirection avec des paramètres de flux de données redirigés, comprenant des tables distinctes pour des flux de données redirigés par le dispositif d'accès au réseau lui-même et des flux de données redirigés par des dispositifs d'accès au réseau voisins.

**28.** Dispositif d'accès au réseau selon l'une quelconque des revendications 20 à 27, adapté pour la communication avec des dispositifs de communication sans fil (201-206).

**29.** Système d'accès au réseau (20), comprenant un nombre de dispositifs d'accès au réseau (110, 120, 130) et au moins un serveur de réseau centralisé (600) pour organiser ledit nombre de dispositifs d'accès au réseau (110, 120, 130) en groupes de dispositifs d'accès au réseau, ledit nombre de dispositifs d'accès au réseau comprenant au moins deux dispositifs d'accès au réseau (110, 120, 130) selon l'une quelconque des revendications 20 à 28,

dans lequel ledit serveur de réseau centralisé (600) comprend :

- des moyens de réception pour recevoir de chacun dudit nombre de dispositifs d'accès au réseau (110, 120, 130) une liste de voisins, ladite liste de voisins comprenant des adresses et des informations de connectivité sans fil de chaque dispositif d'accès au réseau voisin du dispositif d'accès au réseau émetteur respectif,
- des moyens de détermination de groupe pour organiser ledit nombre de dispositifs d'accès au réseau en groupes de dispositifs d'accès au réseau sur la base d'un algorithme de mise en grappe prédéfini et de listes de voisins reçues, et
- des moyens de transmission pour transmettre des informations de groupe à chacun dudit nombre de dispositifs d'accès au réseau.

30. Système d'accès au réseau selon la revendication 29, dans lequel ledit algorithme de mise en grappe prédéfini est un algorithme de mise en grappe exclusif, entraînant le fait que chacun dudit nombre de dispositifs d'accès au réseau (110, 120, 130) appartienne à un seul groupe.

31. Système d'accès au réseau selon la revendication 29 ou 30, dans lequel le serveur de réseau centralisé (600) est adapté pour communiquer avec les dispositifs d'accès au réseau (110, 120, 130) au moyen d'une connexion de gestion à distance selon le Rapport technique de Forum DSL TR-069.

32. Système d'accès au réseau selon l'une quelconque des revendications 29 à 31, dans lequel le serveur de réseau centralisé (600) est adapté pour transmettre un signal de déclenchement à un dispositif d'accès au réseau (110, 120, 130) pour initier la génération et la transmission d'une liste de voisins.

33. Système d'accès au réseau selon l'une quelconque des revendications 29 à 32, dans lequel ledit algorithme de mise en grappe prédéfini est adapté pour former des groupes de dispositifs d'accès au réseau, de sorte que chaque dispositif d'accès au réseau appartenant à un groupe ait une connectivité à un seul bond à au moins un autre membre du même groupe.

34. Système d'accès au réseau selon l'une quelconque des revendications 29 à 33, dans lequel ledit algorithme de mise en grappe prédéfini est adapté pour former des groupes de dispositifs d'accès au réseau, de sorte que chaque dispositif d'accès au réseau appartenant à un groupe ait une connectivité à un seul bond à tous les autres membres du même groupe.

Fig. 1

10

201

202

User facilities

100

Prior Art

DSLAM — 310

Broadband Access Network

BRAS — 320

Internet

500

Backend systems

414

412

AAA server

410

AC server

420

424

422

Fig. 2

Fig. 3

Fig. 4

**Networking Stack** — 750

**Buffer manager** — 740

**Flow Redirection Module** — 800

**Header Inspection Unit** — 730

**Wireless Driver** — 720
**Wireless Distribution System** — 722

**Wireless Hardware** — 710

Fig. 5

```
                        ┌──────────────────────────────┐        750
                        │      Networking Stack         │ ╱╲___ ·
                        └──────────────────────────────┘
                                 │          ▲
                                 │          │
                                 │   ┌─────────────────┐           740
                                 │   │  Buffer manager │ ╱╲___
                                 │   └─────────────────┘
                                 │          ▲
                                 ▼          │
              ┌──────────────┐   ┌─────────────────┐
      920     │Reverse Private│  │   Private NAT   │ ╱╲___
   ╱╲___ ·    │     NAT       │  └─────────────────┘
              └──────────────┘          ▲
                                 │      │
                                 │   ┌─────────────────┐           730
                                 │   │     Header      │ ╱╲___
                                 │   │ Inspection Unit │
                                 │   └─────────────────┘
                                 │          ▲                      720
                                 ▼          │                ╱╲___
              ┌────────────────────────────────────────┐          722
              │     Wireless Driver                     │    ╱╲___
              │  ┌──────────────────────────────────┐   │
              │  │  Wireless Distribution System    │   │
              │  └──────────────────────────────────┘   │
              └────────────────────────────────────────┘
                        │              ▲
                        ▼              │                           710
              ┌────────────────────────────────────────┐    ╱╲___
              │          Wireless Hardware              │
              └────────────────────────────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050053046 A1

- US 2004095942 A1

**Non-patent literature cited in the description**

- **M. BERG et al.** A Concept for Public Access to Privately Operated Cooperating Local Access Points. *Vehicular Technology Conference 2005 IEEE 61st Stockholm,* 30 April 2005, 2959-2963